# FASCICULE DE BREVET EUROPEEN

(11) **EP 3 693 840 B1**
(45) Date de publication et mention de la délivrance du brevet: **15.11.2023**
(21) Numéro de dépôt: 20154903.7
(22) Date de dépôt: 31.01.2020
(51) Int. Cl.: G06F 3/04883, G06F 3/04886, G06F 21/31

(54) **PROCÉDÉ DE VALIDATION D'AU MOINS UNE DONNÉE ENTRÉE SUR UN TERMINAL, PRODUIT D'ORDINATEUR, DISPOSITIF ET TERMINAL CORRESPONDANTS**
VALIDIERUNGSVERFAHREN MINDESTENS EINER AUF EINEM ENDGERÄT EINGEGANGENEN DATENINFORMATION, ENTSPRECHENDES COMPUTERPROGRAMMPRODUKT, ENTSPRECHENDE VORRICHTUNG UND ENTSPRECHENDES ENDGERÄT
METHOD FOR VALIDATING AT LEAST ONE INPUT DATA ITEM ON A TERMINAL, CORRESPONDING COMPUTER PROGRAM, DEVICE AND TERMINAL

(30) Priorité: 05.02.2019 FR 1901141
(43) Date de publication de la demande: 12.08.2020
(73) Titulaire: Banks and Acquirers International Holding, 75015 Paris (FR)
(72) Inventeur: ANDRE, Jérôme, 26800 Montoison (FR); PAVAGEAU, Stéphane, 26600 La Roche de Glun (FR)
(74) Mandataire: LLR

(56) Documents cités:
- EP-A1- 3 370 180

## Description

### Domaine de l'invention

Le domaine de l'invention est celui de l'entrée (ou saisie) de données sur un terminal via un moyen de saisie tactile (e.g. un écran tactile, un clavier physique capacitif, etc.)

Plus particulièrement, l'invention se rapporte à un procédé de validation permettant de sécuriser l'entrée de données via un tel moyen de saisie tactile.

L'invention a ainsi de nombreuses applications, notamment mais non exclusivement dans les domaines nécessitant l'entrée de données sensibles comme par exemple une donnée d'identification personnelle (ou code PIN pour « Personnal Identification Number » en anglais) sur un terminal de paiement, un smartphone, un ordinateur, etc.

### Art antérieur et ses inconvénients

On s'attache plus particulièrement par la suite à décrire une problématique existante dans le domaine des terminaux de paiement à laquelle ont été confrontés les inventeurs de la présente demande de brevet. L'invention ne se limite bien sûr pas à ce domaine particulier d'application, mais présente un intérêt pour la validation de toute donnée sensible entrée sur un moyen d'entrée tactile, e.g. un code PIN de déverrouillage sur l'écran tactile d'un smartphone, d'un ordinateur, etc.

L'utilisation des technologies tactiles pour les écrans et claviers de terminaux de paiements est en plein essor, de même que l'utilisation d'un terminal mobile de communication d'un utilisateur pour réaliser des opérations de paiement.

Ces deux évolutions dans le domaine du terminal de paiement posent des questions cruciales de sécurité liées notamment aux traces de doigt laissées par l'utilisateur, par exemple lors de la saisie d'un code confidentiel.

En effet, de tels terminaux doivent respecter des exigences de sécurité spécifiques pour obtenir les différents agréments leur permettant de mettre en oeuvre des opérations de paiement (ou transactions). Ainsi, il est rédhibitoire pour un tel terminal que l'on puisse repérer le code confidentiel saisi par un utilisateur par la simple observation des traces de doigts laissées par cette saisie sur l'écran tactile.

Dans le domaine général des dispositifs présentant un écran tactile (par exemple pour un smartphone ou une tablette), il existe des solutions de traitement de surface permettant d'atténuer les traces de doigt d'un utilisateur sur un écran tactile, plus pour des raisons esthétiques que sécuritaires. Ces solutions consistent par exemple à appliquer sur la face avant du dispositif (en verre ou en plastique par exemple), une fois fabriquée (voire même une fois intégrée au dispositif) un vernis, un film spécial ou un traitement chimique.

Un inconvénient de ces solutions réside dans le fait d'ajouter de la matière sur la face avant, voire même un composant supplémentaire, engendrant de ce fait des désagréments en termes de visibilité des caractères affichés sous cette face avant et dégradant ainsi l'ergonomie pour l'utilisateur.

Un autre inconvénient de ces solutions réside dans la durée de vie de ces traitements de surface, qui doivent potentiellement être renouvelés en cas de détérioration du traitement de surface due à une utilisation intensive de l'écran tactile.

Enfin, un autre inconvénient de ces solutions réside dans leur prix important, impactant le prix global du dispositif.

Il existe donc un besoin pour une solution alternative pour valider de manière sécurisée des données entrées sur un moyen d'entrée tactile (e.g. un écran tactile, un clavier physique tactile, etc.), par exemple en garantissant le respect des exigences de sécurité liées aux terminaux de paiement. Le document EP 3 370 180 A1 divulgue un système pour améliorer la sécurité lors de l'entrée d'un code d'authentification.

### Exposé de l'invention

Dans un mode de réalisation de l'invention, il est proposé un procédé de validation d'au moins une donnée entrée sur un terminal. Un tel procédé comprend les étapes suivantes :
- détection d'au moins un contact sur un moyen d'entrée tactile du terminal, ledit au moins un contact définissant ladite au moins une donnée entrée sur le terminal et une zone de contact sur le moyen d'entrée tactile ;
- détection, postérieurement à la détection d'au moins un contact, d'au moins un mouvement de déplacement d'un autre contact sur le moyen d'entrée tactile, ledit au moins un mouvement de déplacement définissant une zone d'effacement sur le moyen d'entrée tactile ;
- validation de ladite au moins une donnée entrée lorsque la zone d'effacement recouvre au moins partiellement la zone de contact.

Ainsi, l'invention propose une solution nouvelle et inventive pour valider de manière sécurisée des données (e.g. un code PIN) entrées via un moyen d'entrée tactile (e.g. un écran tactile, un clavier physique tactile, etc.) d'un terminal.

En effet, une fois l'entrée proprement dite des données faite (e.g. une fois qu'un nombre prédéterminé de données est entrée, ou après une durée prédéterminée dédiée à l'entrée proprement dite), le mouvement de déplacement requis pour valider l'entrée permet d'effacer au moins une partie des traces (ou du moins les atténuer et les mélanger entre elles lorsque l'effacement n'est pas total) laissées par l'utilisateur sur le moyen d'entrée du terminal. De la sorte, il devient difficile de retrouver les zones de contact sur lesquels l'utilisateur a appuyé pour entrer les données et ainsi reconstruire a posteriori les données en question.

Selon un mode de réalisation, une pluralité de données est entrée sur le terminal. La zone de contact comprend une pluralité de zones de contact correspondant chacune à une donnée entrée parmi la pluralité de données entrées. La pluralité de données entrées est validée lorsque la zone d'effacement recouvre au moins partiellement chacune des zones de contact de la pluralité de zones de contact.

Ainsi, lorsque plusieurs données sont entrées, les traces liées à chacune d'elles sont effacées, ou du moins atténuées et mélangées entre elles lorsque l'effacement n'est pas total.

Selon un mode de réalisation, ladite au moins une donnée entrée est validée lorsque la zone d'effacement recouvre au moins 50 pourcents de la zone de contact ou de chacune des zones de contact de la pluralité de zones de contact, de préférence 95 pourcents de la zone de contact ou de chacune des zones de contact de la pluralité de zones de contact.

Ainsi, la sécurisation et l'ergonomie du procédé de validation sont optimisés en fonction de la valeur de pourcentage de recouvrement requis. Par exemple une forte valeur de pourcentage permet une plus forte sécurisation. A contrario, une plus faible valeur de pourcentage permet d'améliorer l'ergonomie pour l'utilisateur.

Selon un mode de réalisation, ledit au moins un mouvement de déplacement définit au moins un caractère de validation prédéfini.

Ainsi, la sécurisation se trouve renforcée, le mouvement de déplacement de l'utilisateur devant à la fois tendre à effacer les données entrées sur le moyen d'entrée tactile, mais aussi définir un caractère de validation prédéfini reconnu du terminal en tant que tel (e.g. un ou plusieurs caractère(s) de validation secret(s) que l'utilisateur a préalablement choisi).

Selon un mode de réalisation, ledit au moins un contact sur le moyen d'entrée tactile appartient au groupe comprenant :
- au moins un appui sur une touche d'un clavier virtuel affiché sur un écran tactile du terminal ;
- au moins un appui sur une touche d'un clavier physique tactile du terminal ;
- au moins une représentation cursive de ladite au moins une donnée dessinée sur un écran tactile du terminal ; et
- au moins un schéma représentatif de ladite au moins une donnée dessiné sur un écran tactile du terminal.

Selon un mode de réalisation, le procédé de validation comprend en outre une étape de restitution d'une information représentative de la validation de ladite au moins une donnée entrée.

Ainsi, l'utilisateur du terminal sait lorsque l'entrée des données qu'il a effectuée est validée. Par exemple, il s'agit d'une restitution audio (plus particulièrement adaptée à un utilisateur malvoyant), ou visuelle (par exemple via un message ou une icône affiché sur un écran du terminal).

Selon un mode de réalisation, ladite au moins une donnée est une donnée d'identification personnelle.

L'invention concerne également un programme d'ordinateur comprenant des instructions de code de programme pour la mise en oeuvre du procédé de validation tel que décrit précédemment, selon l'un quelconque de ses différents modes de réalisation, lorsqu'il est exécuté par un processeur.

Dans un mode de réalisation de l'invention, il est proposé un dispositif de validation d'au moins une donnée entrée sur un terminal. Un tel dispositif de validation comprend une machine de calcul reprogrammable ou une machine de calcul dédiée configurée pour mettre en oeuvre les étapes du procédé de validation selon l'invention tel que décrit précédemment, selon l'un quelconque de ses différents modes de réalisation.

Ainsi, les caractéristiques et avantages de ce dispositif de validation sont les mêmes que ceux des étapes correspondantes du procédé de gestion décrit précédemment. Par conséquent, ils ne sont pas détaillés plus amplement.

Dans un mode de réalisation de l'invention, il est proposé un terminal électronique comprenant un dispositif de validation tel que décrit précédemment, selon l'un quelconque de ses différents modes de réalisation. Un tel terminal électronique est par exemple un terminal de paiement électronique.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig. 1****]** représente un terminal à écran tactile selon un mode de réalisation de l'invention ;
**[****Fig. 2****]** représente les étapes d'un procédé de validation du code PIN entré sur le terminal de la [Fig. 1] selon un mode de réalisation de l'invention ;
**[****Fig. 3a****]** représente des zones de contact sur l'écran du terminal de la [Fig. 1] lors de l'entrée du code PIN selon un mode de réalisation de l'invention ;
**[****Fig. 3b****]** représente une zone d'effacement recouvrant les zones de contact de la [Fig. 3a] selon un mode de réalisation de l'invention ;
**[****Fig. 3c****]** représente une zone d'effacement recouvrant les zones de contact de la [Fig. 3a] selon un autre mode de réalisation de l'invention ;
**[****Fig. 3d****]** représente une zone d'effacement recouvrant les zones de contact de la [Fig. 3a] selon encore un autre mode de réalisation de l'invention ;
**[****Fig. 3e****]** représente une zone d'effacement recouvrant les zones de contact de la [Fig. 3a] selon encore un autre mode de réalisation de l'invention ;
**[****Fig. 4a****]** représente des zones de contact sur l'écran du terminal de la [Fig. 1] lors de l'entrée du code PIN selon un autre mode de réalisation de l'invention ;
**[****Fig. 4b****]** représente une zone d'effacement recouvrant les zones de contact de la [Fig. 4a] selon un mode de réalisation de l'invention ;
**[****Fig. 5a****]** représente des zones de contact sur l'écran du terminal de la [Fig. 1] lors de l'entrée du code PIN selon encore un autre mode de réalisation de l'invention ;
**[****Fig. 5b****]** représente une zone d'effacement recouvrant les zones de contact de la [Fig. 5a] selon un mode de réalisation de l'invention ;
**[****Fig. 6****]** représente une zone d'effacement sur un clavier physique tactile selon un mode de réalisation de l'invention ;
**[****Fig. 7****]** représente un exemple de structure de dispositif permettant la mise en oeuvre des étapes du procédé de la [Fig. 2] selon un mode de réalisation de l'invention.

### Description détaillée de modes de réalisation de l'invention

Le principe général de l'invention repose sur la détection, une fois les données entrées sur un moyen d'entrée tactile (e.g. un écran tactile, un clavier physique tactile, etc.) d'un terminal, d'un mouvement de déplacement tendant à effacer au moins une partie des traces (ou du moins les atténuer ou les mélanger entre elles lorsque l'effacement n'est pas total) laissées par l'utilisateur sur le moyen d'entrée tactile en question lorsqu'il a entré les données. De la sorte, il devient difficile de retrouver les zones de contact sur lesquels l'utilisateur a appuyé pour entrer les données et ainsi reconstruire a posteriori les données en question.

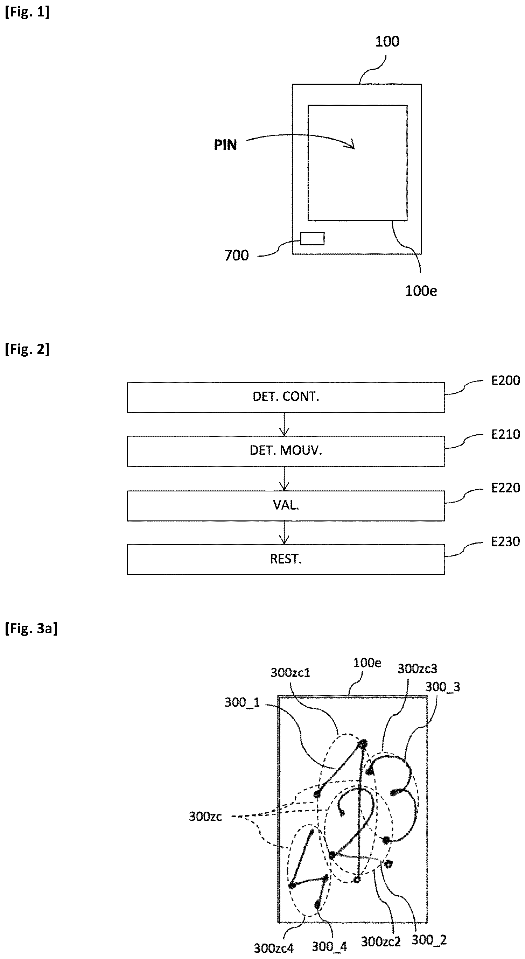

On présente désormais, en relation avec la **[****Fig. 1****]** un terminal 100 électronique (e.g. un terminal de paiement électronique, un smartphone, une tablette ou un ordinateur) à écran tactile 100e selon un mode de réalisation de l'invention.

Plus particulièrement, l'écran tactile 100e permet à un utilisateur d'entrer des données sur le terminal en question. Pour se faire, l'utilisateur se sert par exemple d'un moyen de saisie, e.g. son doigt ou un stylet adapté à l'écran tactile 100e, afin d'entrer les données sur le terminal.

Dans d'autres modes de réalisation non illustrés, le terminal est muni d'un clavier physique tactile, e.g. un clavier muni de touches capacitives permettant en outre la détection d'un contact et/ou d'un mouvement à leur surface.

De retour à la [Fig. 1], l'écran tactile 100e permet par exemple à l'utilisateur d'entrer une donnée d'identification personnelle, ou code PIN. Un tel code PIN permet par exemple de déverrouiller le terminal 100 lorsque le terminal 100 en question est un smartphone, un ordinateur, etc., ou de valider une transaction bancaire lorsque le terminal 100 est un terminal de paiement électronique.

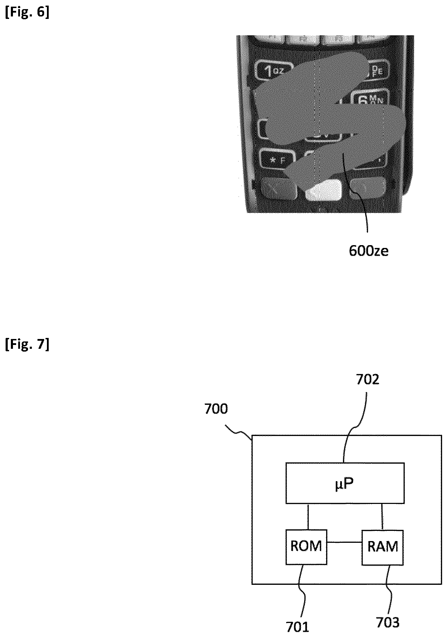

Le terminal 100 est par ailleurs muni d'un dispositif 700 permettant de mettre en oeuvre le procédé de validation d'au moins une donnée entrée (selon l'un quelconque de ses modes de réalisation) décrit ci-dessous en relation avec la [Fig. 2]. Des exemples de structures matérielles permettant d'implémenter le dispositif 700 sont par ailleurs décrites plus en détail ci-dessous en relation avec la [Fig. 7].

Dans le mode de réalisation de la [Fig. 1], le dispositif 700 et le procédé de validation associé permettent de valider de manière sécurisée l'entrée du code PIN sur le terminal 100. Dans d'autres modes de réalisation, le dispositif 700 et le procédé de validation associé permettent de valider de manière sécurisée tout autre type de données entrées sur le terminal 100 (un ou plusieurs caractères, un appui de validation en une zone particulière de l'écran tactile 100e ou en réponse à un challenge, etc.).

On présente désormais, en relation avec la **[****Fig. 2****]** les étapes d'un procédé de validation du code PIN entré sur le terminal 100 selon un mode de réalisation de l'invention. Des exemples de mise en oeuvre des étapes en question sont par ailleurs décrites en relation avec les figures **[****Fig. 3a] à [Fig. 6****].**

Lors d'une **étape E200,** un (ou plusieurs) contact est détecté sur l'écran tactile 100e afin de définir au moins une donnée entrée sur le terminal 100, ici le code PIN.

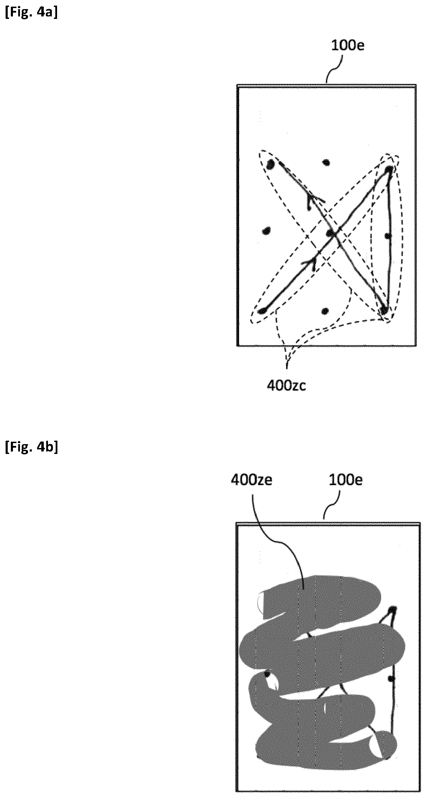

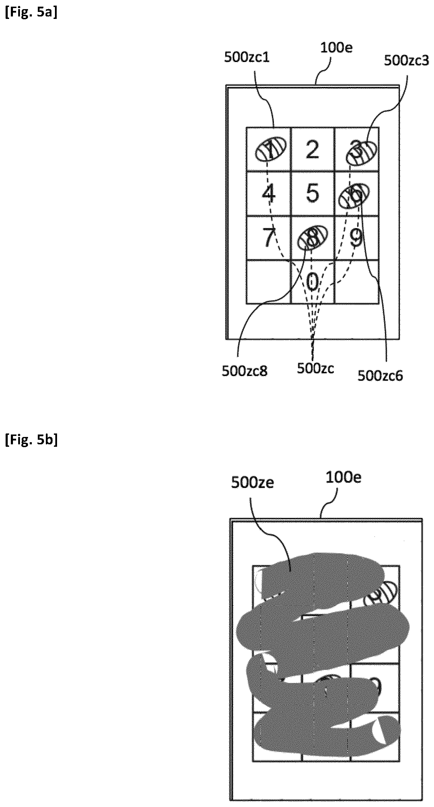

Par exemple, l'utilisateur entre la (ou les) donnée sur le terminal 100 via :
- au moins une représentation cursive de la (ou les) donnée dessinée sur l'écran tactile 100e comme illustré sur la [Fig. 3a] ;
- au moins un schéma représentatif de la (ou les) donnée dessiné sur l'écran tactile 100e comme illustré sur la [Fig. 4a] ; ou
- au moins un appui sur une touche d'un clavier virtuel affiché sur l'écran tactile 100e comme illustré sur la [Fig. 5a].

Dans d'autres modes de réalisation dans lesquels le terminal est muni d'un clavier physique tactile (e.g. à touches capacitives), l'utilisateur entre la (ou les) donnée sur le terminal 100 par exemple via au moins un appui sur une touche du clavier physique en question.

De retour à la [Fig. 2], le terminal 100 met par exemple en oeuvre un mode de saisie particulier afin que l'entrée de la (ou des) donnée soit effective pour le terminal 100. Par exemple, le terminal 100 met en oeuvre le mode de saisie des données tant qu'il n'a pas détecté qu'un nombre prédéterminé de données sont entrées. Dans le mode de réalisation illustré dans lequel un code PIN est entrée sur le terminal 100, le terminal 100 met en oeuvre le mode de saisie des données tant qu'il n'a pas détecté autant de caractères entrés que le nombre de caractères prédéterminé qui composent le code PIN attendu.

Dans d'autres mode de réalisation non illustrés, le terminal met en oeuvre le mode de saisie pendant une durée prédéterminée, indépendamment du nombre de données entrées.

Dans encore d'autres mode de réalisation non illustrés, le terminal met en oeuvre le mode de saisie jusqu'à ce que l'utilisateur entre une donnée prédéterminée indiquant qu'il a fini d'entrer les données.

De retour à la [Fig. 2], le (ou les) contact détecté sur l'écran tactile 100e afin de définir la (ou les) donnée entrée sur le terminal 100 définit également une zone de contact 300zc, 400zc, 500zc sur l'écran tactile 100e.

Par exemple, les systèmes d'exploitation de tablette et/ou ordinateur et/ou smartphone du type iOS^{®} ou Android^{®} renvoient non seulement le point de contact sur l'écran tactile 100e (e.g. en termes de coordonnées du point de plus forte variation de capacité sur l'écran tactile 100e), mais aussi différentes informations concernant la surface d'appui (e.g. le diamètre de la zone de contact, les paramètre de la zone de contact telle qu'approximée par exemple par une ellipse : petit et grand diamètre, angle d'inclinaison par rapport à un côté de l'écran tactile 100e).

Ainsi dans l'exemple illustré sur la [Fig. 3a] où le code PIN correspond à la suite des caractères « 1 », « 2 », « 3 » et « 4 » entrés de manière cursive sur l'écran 100e, le déplacement du doigt de l'utilisateur sur l'écran 100e afin d'entrer le caractère « 1 » définit une première zone de contact 300zc1 correspondant à la superposition des surfaces renvoyées par le système d'exploitation du terminal 100 pendant le déplacement du doigt de l'utilisateur lorsque ce dernier dessine le « 1 ». De la même manière :
- une deuxième zone de contact 300zc2 correspond à la superposition des surfaces renvoyées par le système d'exploitation du terminal 100 en relation avec le déplacement du doigt de l'utilisateur pendant l'entrée du caractère « 2 » ;
- une troisième zone de contact 300zc3 correspond à la superposition des surfaces renvoyées par le système d'exploitation du terminal 100 en relation avec le déplacement du doigt de l'utilisateur pendant l'entrée du caractère « 3 » ; et
- une quatrième zone de contact 300zc4 correspond à la superposition des surfaces renvoyées par le système d'exploitation du terminal 100 en relation avec le déplacement du doigt de l'utilisateur pendant l'entrée du caractère « 4 ».

Au final, la zone de contact 300zc définie sur l'écran tactile 100e lors de l'entrée du code PIN correspond à l'union des zones de contact 300zc1, 300zc2, 300zc3 et 300zc4.

De même dans l'exemple illustré sur la [Fig. 5a] dans lequel le code PIN correspond à la suite des caractères « 1 », « 8 », « 3 » et « 6 » entrés via des appuis sur les touches correspondantes du clavier virtuel affiché sur l'écran tactile 100e, autant de zones de contact 500zc1, 500zc8, 500zc3 et 500zc6 que d'appuis correspondants peuvent être définies.

Dans ce cas également, la zone de contact 500zc définie sur l'écran tactile 100e lors de l'entrée du code PIN correspond à l'union des zones de contact 500zc1, 500zc8, 500zc3 et 500zc6.

A contrario, dans l'exemple illustré sur la [Fig. 4a] où le code PIN correspond au dessin d'un schéma représentatif du code PIN sur l'écran 100e, une seule zone de contact 400zc est directement définie sur l'écran tactile 100e lors du mouvement du doigt de l'utilisateur sur l'écran tactile 100e.

Lors d'une **étape E210,** postérieure à l'étape E200, un (ou des) mouvement de déplacement d'un autre contact est détecté sur l'écran tactile 100e.

Pour ce faire, le terminal 100 est par exemple dans un mode particulier dédié à la détection du (ou des) mouvement en question. Par exemple, le terminal 100 reste dans ce mode dédié à la détection du (ou des) mouvement pendant une durée prédéterminée, ou jusqu'à ce que la validation de la (ou les) donnée entrée soit effective.

Plus particulièrement, le (ou les) mouvement de déplacement définit une zone d'effacement sur l'écran tactile 100e. Par exemple, dans les exemples illustrés sur :

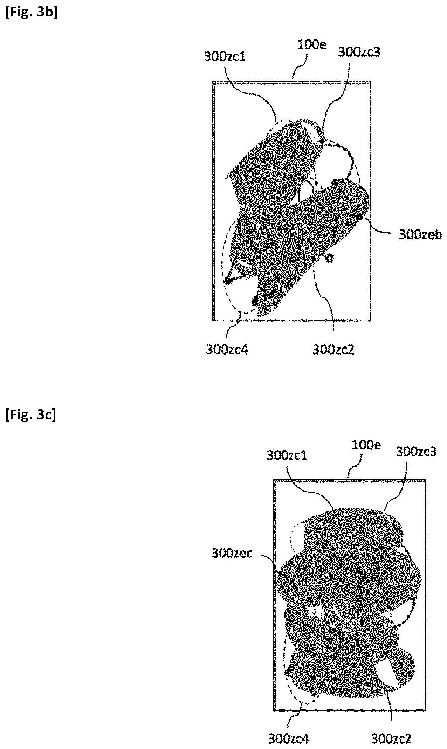

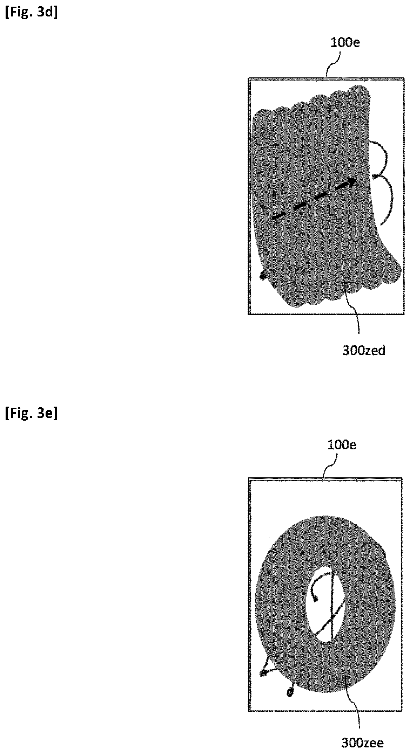

- les [Fig. 3b], [Fig. 3c] et [Fig. 3e], l'utilisateur imprime le (ou les) mouvement en question via un doigt qu'il déplace sur l'écran tactile 100e, définissant les zones d'effacement respectives 300zeb, 300zec et 300zee ;
- la [Fig. 3d] l'utilisateur imprime le (ou les) mouvement en question via la paume de la main qu'il déplace sur l'écran tactile 100e suivant le sens défini par la flèche en pointillés, définissant la zone d'effacement 300zed ;
- les [Fig. 4b] et [Fig. 5b], l'utilisateur imprime plusieurs mouvements via plusieurs doigts qu'il déplace simultanément et/ou alternativement sur l'écran tactile 100e, définissant les zones d'effacement respectives 400ze et 500ze ; et
- la [Fig. 6] l'utilisateur imprime le (ou les) mouvement en question via un doigt qu'il déplace sur un clavier physique tactile lorsque le terminal considéré en est équipé, définissant la zone d'effacement 600ze.

De retour à la [Fig. 2], lors d'une **étape E220,** la (ou les) donnée composant le code PIN est validée lorsque la zone d'effacement 300zeb, 300zec, 300zed, 300zee, 400ze, 500ze ou 600ze recouvre au moins partiellement la zone de contact correspondante 300zc, 400zc ou 500zc.

Ainsi, le mouvement de déplacement requis pour valider l'entrée de la (ou des) donnée permet d'effacer au moins une partie des traces (ou du moins les atténuer et les mélanger entre elles lorsque l'effacement n'est pas total) laissées par l'utilisateur sur l'écran tactile 100e. De la sorte, il devient difficile de retrouver les zones de contact sur lesquels l'utilisateur a appuyé pour entrer les données et ainsi reconstruire a posteriori les données en question.

Dans l'exemple illustré sur la [Fig. 3a], une pluralité de données est entrée sur le terminal 100 (ici la suite des caractères « 1 », « 2 », « 3 » et « 4 » correspondants au code PIN selon cet exemple). Ainsi la zone de contact 300zc comprend une pluralité de zones de contact 300zc1, 300zc2, 300zc3 et 300zc4 correspondant chacune à une donnée entrée parmi la pluralité de données entrées. Dans ce cas et selon certains modes de réalisation, la pluralité de données entrées est validée lorsque la zone d'effacement 300zeb, 300zec, 300zed ou 300zee recouvre au moins partiellement chacune des zones de contact 300zc1, 300zc2, 300zc3 et 300zc4.

Ainsi, lorsque plusieurs données sont entrées, les traces liées à chacune d'elles sont effacées, ou du moins atténuées et mélangées entre elles lorsque l'effacement n'est pas total.

Il en est de même dans l'exemple illustré sur la [Fig. 5a] dans lequel une pluralité de données est également entrée sur le terminal 100 (ici la suite des caractères « 1 », « 8 », « 3 » et « 6 » correspondants au code PIN selon cet exemple). La zone de contact 500zc comprend ainsi une pluralité de zones de contact 500zc1, 500zc3, 500zc6 et 500zc8 correspondant chacune à une donnée entrée parmi la pluralité de données entrées. Là encore, selon certains modes de réalisation, la pluralité de données entrées est validée lorsque la zone d'effacement 500ze recouvre au moins partiellement chacune des zones de contact 500zc1, 500zc3, 500zc6 et 500zc8.

Par exemple, la (ou les) donnée entrée est validée lorsque la zone d'effacement 300zeb, 300zec, 300zed, 300zee, 400ze ou 500ze recouvre au moins 50 pourcents de la zone de contact correspondante 300zc, 400zc ou 500zc (ou de chacune des zones de contact de la pluralité de zones de contact correspondante le cas échéant suivant le mode de réalisation précité considéré), de préférence 95 pourcents de la zone de contact (ou de chacune des zones de contact de la pluralité de zones de contact).

En pratique, d'autres valeurs de seuil de validation que 50 ou 95 pourcents peuvent être considérés (e.g. 60 pourcents, 70 pourcents, 80 pourcents, etc.). En effet, la sécurisation et l'ergonomie du procédé de validation sont optimisés en fonction de la valeur de pourcentage de recouvrement requis. Par exemple une forte valeur de pourcentage permet une plus forte sécurisation. A contrario, une plus faible valeur de pourcentage permet d'améliorer l'ergonomie pour l'utilisateur.

Dans l'exemple de la [Fig. 3e], le (ou les) mouvement de déplacement imprimé par l'utilisateur sur l'écran tactile 100e définit, en plus de la zone d'effacement 300zee, un caractère de validation prédéfini (ici un « O ») reconnu en tant que tel par le dispositif 700.

Ainsi, la sécurisation de la validation de la (ou des) donnée entrée se trouve renforcée, le mouvement de déplacement de l'utilisateur devant à la fois tendre à effacer les données entrées sur l'écran tactile 100e, mais aussi définir un caractère de validation prédéfini reconnu en tant que tel.

De retour à la [Fig. 2], lors d'une **étape E230,** une information représentative de la validation de la (ou des) donnée entrée est restituée à l'utilisateur du terminal 100.

Il s'agit par exemple d'une restitution audio (plus particulièrement adaptée à un utilisateur malvoyant), ou visuelle (par exemple via un message ou une icône affiché sur un écran du terminal). Ainsi, l'utilisateur du terminal sait lorsque l'entrée des données qu'il a effectuée est validée.

Dans d'autres modes de réalisation, l'étape E230 n'est pas mise en oeuvre et la (ou les) donnée entrée est validée indépendamment de toute restitution explicite à l'utilisateur d'une information représentative de la validation en question.

On présente désormais, en relation avec la **[****Fig. 7****]** un exemple de structure de dispositif 700 permettant de mettre en oeuvre les étapes du procédé de validation de la [Fig. 2] selon un mode de réalisation de l'invention.

Le dispositif 700 comprend une mémoire vive 703 (par exemple une mémoire RAM), une unité de traitement 702 équipée par exemple d'un processeur, et pilotée par un programme d'ordinateur stocké dans une mémoire morte 701 (par exemple une mémoire ROM ou un disque dur). A l'initialisation, les instructions de code du programme d'ordinateur sont par exemple chargées dans la mémoire vive 703 avant d'être exécutées par le processeur de l'unité de traitement 702.

Cette [Fig. 7] illustre seulement une manière particulière, parmi plusieurs possibles, de réaliser le dispositif 700 afin qu'il effectue certaines étapes du procédé de validation selon l'invention (selon l'un quelconque des modes de réalisation décrits ci-dessus en relation avec la [Fig. 2]). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 700 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Dans certains modes de réalisation, le dispositif 700 est inclus dans un terminal électronique, e.g. dans le terminal 100.

## Revendications

1. Procédé de validation d'au moins une donnée (300_1, 300_2, 300_3, 300_4) entrée sur un terminal (100),
comprenant les étapes suivantes :
- détection (E200) d'au moins un contact sur un moyen d'entrée tactile (100e) dudit terminal, ledit au moins un contact définissant :
ladite au moins une donnée entrée sur ledit terminal ; et
une zone de contact (300zc, 400zc, 500zc) sur ledit moyen d'entrée tactile ;
- détection (E210), postérieurement à ladite détection d'au moins un contact, d'au moins un mouvement de déplacement d'un autre contact sur ledit moyen d'entrée tactile, ledit au moins un mouvement de déplacement définissant une zone d'effacement (300zeb, 300zec, 300zed, 300zee, 400ze, 500ze, 600ze) sur ledit moyen d'entrée tactile ;
**caractérisé en ce qu'**il comprend en outre l'étape suivante :
- validation (E220) de ladite au moins une donnée entrée lorsque ladite zone d'effacement recouvre au moins partiellement ladite zone de contact.

2. Procédé selon la revendication 1 dans lequel une pluralité de données est entrée sur ledit terminal, ladite zone de contact (300zc, 500zc) comprenant une pluralité de zones de contact (300zc1, 300zc2, 300zc3, 300zc4, 500zc1, 500zc3, 500zc6, 500zc8) correspondant chacune à une donnée entrée parmi ladite pluralité de données entrées,
ladite pluralité de données entrées étant validée lorsque ladite zone d'effacement recouvre au moins partiellement chacune desdites zones de contact de ladite pluralité de zones de contact.

3. Procédé selon la revendication 1 ou 2 dans lequel ladite au moins une donnée entrée est validée lorsque ladite zone d'effacement recouvre au moins 50 pourcents de ladite zone de contact ou de chacune desdites zones de contact de ladite pluralité de zones de contact, de préférence 95 pourcents de ladite zone de contact ou de chacune desdites zones de contact de ladite pluralité de zones de contact.

4. Procédé selon l'une quelconque des revendications 1 à 3 dans lequel ledit au moins un mouvement de déplacement définit au moins un caractère de validation prédéfini.

5. Procédé selon l'une quelconque des revendications 1 à 4 dans lequel ledit au moins un contact sur ledit moyen d'entrée tactile appartient au groupe comprenant :
- au moins un appui sur une touche d'un clavier virtuel affiché sur un écran tactile dudit terminal ;
- au moins un appui sur une touche d'un clavier physique tactile dudit terminal ;
- au moins une représentation cursive de ladite au moins une donnée dessinée sur un écran tactile dudit terminal ; et
- au moins un schéma représentatif de ladite au moins une donnée dessinée sur un écran tactile dudit terminal.

6. Procédé selon l'une quelconque des revendications 1 à 5 comprenant en outre une étape de restitution (E230) d'une information représentative de la validation de ladite au moins une donnée entrée.

7. Procédé selon l'une quelconque des revendications 1 à 6 dans lequel ladite au moins une donnée est une donnée d'identification personnelle.

8. Produit programme d'ordinateur comprenant des instructions de code de programme pour la mise en oeuvre d'un procédé selon l'une quelconque des revendications 1 à 7, lorsque ledit programme est exécuté par un processeur.

9. Dispositif (700) de validation d'au moins une donnée (300_1, 300_2, 300_3, 300_4) entrée sur un terminal (100),
comprenant une machine de calcul reprogrammable (702) ou une machine de calcul dédiée configurée pour :
- détecter au moins un contact sur un moyen d'entrée tactile (100^{e}) dudit terminal, ledit au moins un contact définissant :
ladite au moins une donnée entrée sur ledit terminal ; et
une zone de contact (300zc, 400zc, 500zc) sur ledit moyen d'entrée tactile ;
- détecter, postérieurement à ladite détection d'au moins un contact, d'au moins un mouvement de déplacement d'un autre contact sur ledit moyen d'entrée tactile, ledit au moins un mouvement de déplacement définissant une zone d'effacement (300zeb, 300zec, 300zed, 300zee, 400ze, 500ze, 600ze) sur ledit moyen d'entrée tactile ;
**caractérisé en ce que** la machine de calcul reprogrammable (702) ou la machine de calcul dédiée est en outre configurée pour :
- valider ladite au moins une donnée entrée lorsque ladite zone d'effacement recouvre au moins partiellement ladite zone de contact.

10. Terminal électronique (100) **caractérisé en ce qu'**il comprend un dispositif de validation selon la revendication 9.

## Patentansprüche

1. Verfahren zur Validierung mindestens einer Dateninformation (300_1, 300_2, 300_3, 300_4), die an einem Endgerät (100) eingegeben wurde,
aufweisend die folgenden Schritte:
- Erfassen (E200) mindestens einer Berührung auf einem taktilen Eingabemittel (100e) des Endgeräts, wobei die mindestens eine Berührung definiert:
die mindestens eine eingegebene Dateninformation auf dem Endgerät; und
ein Berührungsbereich (300zc, 400zc, 500zc) auf dem taktilen Eingabemittel;
- Erfassen (E210), nach dem Erfassen von mindestens einer Berührung, von mindestens einer Streichbewegung einer weiteren Berührung auf dem taktilen Eingabemittel, wobei die mindestens eine Streichbewegung einen Löschbereich (300zeb, 300zec, 300zed, 300zee, 400ze, 500ze, 600ze) auf dem taktilen Eingabemittel definiert;
**dadurch gekennzeichnet, dass** es ferner den folgenden Schritt aufweist:
- Validieren (E220) der mindestens einen eingegebenen Dateninformation, wenn der Löschbereich den Berührungsbereich mindestens teilweise überlappt.

2. Verfahren nach Anspruch 1, bei dem eine Vielzahl von Dateninformationen an dem Endgerät eingegeben wird, wobei der Berührungsbereich (300zc, 5002c) eine Vielzahl von Berührungsbereichen (300zc1, 300zc2, 300zc3, 300zc4, 500zc1, 500zc3, 500zc6, 500zc8) aufweist, die jeweils einer eingegebenen Dateninformation aus der Vielzahl von eingegebenen Dateninformationen entsprechen,
wobei die Vielzahl von eingegebenen Dateninformationen validiert werden, wenn der Löschbereich jeden der mehreren Berührungsbereiche zumindest teilweise überlappt.

3. Verfahren nach Anspruch 1 oder 2, bei dem die mindestens eine eingegebene Dateninformation validiert wird, wenn der Löschbereich mindestens 50 Prozent des Berührungsbereichs oder jedes der Berührungsbereiche der Vielzahl von Berührungsbereichen, vorzugsweise 95 Prozent des Berührungsbereichs oder jedes der Berührungsbereiche der Vielzahl von Berührungsbereichen, abdeckt.

4. Verfahren nach einem der Ansprüche 1 bis 3, wobei die mindestens eine Streichbewegung mindestens ein vordefiniertes Validierungszeichen definiert.

5. Verfahren nach einem der Ansprüche 1 bis 4, wobei die mindestens eine Berührung des taktischen Eingabemittels zu der Gruppe gehört, die aus folgenden Elementen besteht:
- mindestens ein Drücken einer Taste einer virtuellen Tastatur, die auf einem Touchscreen des Endgeräts angezeigt wird;
- mindestens eine Betätigung einer Taste einer physischen berührungsempfindlichen Tastatur des Endgeräts;
- mindestens eine bildliche Repräsentation der mindestens einen Dateninformation, die auf einem Touchscreen des Endgeräts gezeichnet ist; und
- mindestens ein repräsentatives Muster der mindestens einen auf einem Touchscreen des Endgeräts gezeichneten Dateninformation.

6. Verfahren nach einem der Ansprüche 1 bis 5, das außerdem einen Schritt des Wiedergebens (E230) einer Information aufweist, die für die Validierung der mindestens einen eingegebenen Dateninformationen repräsentativ ist.

7. Verfahren nach einem der Ansprüche 1 bis 6, wobei die mindestens eine Dateninformation ein persönliches Identifikationsdatum ist.

8. Computerprogrammprodukt, das Programmcodeanweisungen zur Durchführung eines Verfahrens nach einem der Ansprüche 1 bis 7 enthält, wenn das Programm von einem Prozessor ausgeführt wird.

9. Vorrichtung (700) zur Validierung mindestens einer Dateninformation (300_1, 300_2, 300_3, 300_4), das an einem Endgerät (100) eingegeben wurde,
mit einer umprogrammierbaren Rechenmaschine (702) oder einer dedizierten Rechenmaschine, die konfiguriert ist, um:
- mindestens eine Berührung auf einem taktilen Eingabemittel (100e) des Endgeräts zu erfassen, wobei die mindestens eine Berührung definiert:
die mindestens eine eingegebene Dateninformation auf dem Endgerät; und
einen Berührungsbereich (3002c, 4002c, 5002c) auf dem taktilen Eingabemittel;
- Erfassen, nach dem Erfassen von mindestens einer Berührung, von mindestens einer Streichbewegung einer anderen Berührung auf dem taktilen Eingabemittel, wobei die mindestens eine Streichbewegung einen Löschbereich (300zeb, 300zec, 300zed, 300zee, 400ze, 500ze, 600ze) auf dem taktilen Eingabemittel definiert;
**dadurch gekennzeichnet, dass** die umprogrammierbare Rechenmaschine (702) oder die dedizierte Rechenmaschine ferner konfiguriert ist, um:
- die mindestens eine eingegebene Dateninformation zu validieren, wenn der Löschbereich den Berührungsbereich mindestens teilweise überlappt.

10. Elektronisches Endgerät (100), **dadurch gekennzeichnet, dass** es eine Validierungsvorrichtung nach Anspruch 9 aufweist.

## Claims

1. Method for validating at least one datum (300_1, 300_2, 300_3, 300_4) entered on a terminal (100),
comprising the following steps:
- detecting (E200) at least one contact on a touch entry mean (100e) of said terminal, said at least one contact defining:
said at least one datum entered on said terminal; and
a contact area (300zc, 400zc, 500zc) on said touch entry mean;
- detecting (E210), after said detection of at least one contact, at least one displacement movement of another contact on said touch entry mean, said at least one displacement movement defining an erasure area (300zeb, 300zec, 300zed, 300zee, 400ze, 500ze, 600ze) on said touch entry mean,
**characterised in that** it further comprises the following step:
- validating (E220) said at least one entered datum when the said erasure area covers at least partially said contact area.

2. Method according to claim 1 in which a plurality of data is entered on said terminal, said contact area (300zc, 500zc) comprising a plurality of contact areas (300zc1, 300zc2, 300zc3, 300zc4, 500zc1, 500zc3, 500zc6, 500zc8) each corresponding to an entered datum from said plurality of entered data,
said plurality of entered data being validated when said erasure area covers at least partially each of said contact areas of said plurality of contact areas.

3. Method according to claim 1 in which said at least one entered datum is validated when said erasure area covers at least 50 percent of said contact area or each of said contact areas of said plurality of contact areas, preferably 95 percent of said contact area or each of said contact areas of said plurality of contact areas.

4. method according to any one of claims 1 to 3, wherein said at least one displacement movement defines at least one predefined validation character.

5. Method according to any one of claims 1 to 4, in which said at least one contact on said touch entry mean belongs to the group consisting of:
- at least one press on a key of a virtual keyboard displayed on a touch screen of said terminal;
- at least one press on a key of a physical touch keyboard of said terminal;
- at least one cursive representation of said at least one datum drawn on a touch screen of said terminal; and
- at least one diagram representing said at least one datum drawn on a touch screen of said terminal

6. The method according to any one of the claims 1 to 5, further comprising a step of restituting (E230) an information representing the validation of said at least one entered datum.

7. The method according to any one of the claims 1 to 6, in which said at least one datum is a personal identification datum.

8. Computer program product comprising program code instructions for the implementation of a method according to any one of claims 1 to 7, when that program is executed by a processor

9. Device (700) for validating at least one datum (300_1, 300_2, 300_3, 300_4) entered on a terminal (100),
comprising a reprogrammable computing machine (702) or a dedicated computing machine configured to:
- detect at least one contact on a touch entry mean (100e) of said terminal, said at least one contact defining:
said at least one datum entered on said terminal; and
a contact area (300zc, 400zc, 500zc) on said touch entry mean;
- detect, after said detection of at least one contact, at least one displacement movement of another contact on said touch entry mean, said at least one displacement movement defining an erasure area (300zeb, 300zec, 300zed, 300zee, 400ze, 500ze, 600ze) on said touch entry mean,
**characterised in that** the reprogrammable computing machine (702) or the dedicated computing machine is also configured to:
- validate said at least one entered datum when the said erasure area covers at least partially said contact area.

10. Electronic terminal (100) **characterised in that** it comprises a device for validating according to the claim 9.
